# EUROPÄISCHE PATENTSCHRIFT

(11) **EP 0 452 821 B1**
(45) Veröffentlichungstag und Bekanntmachung des Hinweises auf die Patenterteilung: **31.08.1994**
(21) Anmeldenummer: 91105860.0
(22) Anmeldetag: 12.04.1991
(51) Int. Cl.: G01G 23/00, G01G 19/08, B65F 3/04

(54) **Wägeeinrichtung für Abfallbehälter an einem Müllsammelfahrzeug**
Weighing device for waste container on a refuse collecting device
Dispositif de pesage pour conteneur à ordures sur un véhicule de ramassage d'ordures

(30) Priorität: 19.04.1990 DE 4012402
(43) Veröffentlichungstag der Anmeldung: 23.10.1991
(73) Patentinhaber: OTTO LIFT-SYSTEME GmbH, 50968 Köln (DE)
(72) Erfinder: Würtz, Robert, W-7121 Erligheim (DE)
(74) Vertreter: Müller, Hans, Dipl.-Ing.

(56) Entgegenhaltungen:
- EP-A- 0 255 624
- EP-A- 0 402 352
- WO-A-89/03794
- DE-A- 3 819 169

## Beschreibung

### TECHNISCHES GEBIET

Die Erfindung betrifft eine Wägeeinrichtung für Abfallbehälter, die an dem Müllsammelfahrzeug bzw. an dessen Hub-Kippvorrichtung ortsfest angebracht ist.

In den letzten Jahren ist die entstehende Abfallmenge derart gestiegen, daß Möglichkeiten zum Reduzieren der Abfallmenge geschaffen werden müssen. Nach dem derzeitigen Gebührensystem werden vom einzelnen Bürger in aller Regel Pauschalbeträge pro Müllbehälter erhoben. Die Gebührenhöhe hängt dabei nicht davon ab, ob der in regelmäßigen Zeitabständen entleerte Müllbehälter jeweils leer, halbvoll oder übervoll ist. Für den einzelnen Bürger besteht somit kein Kostenanreiz, abfallbewußt zu handeln.

Von den Kommunen wird daher überlegt, ein Gebührensystem zu schaffen, das entsprechend der beseitigten Abfallmenge die Gebühren festlegt. Dies hätte zur Folge, daß die beim Bürger anfallende Abfallmenge gewichtsmäßig erfaßt werden muß, damit jeder Bürger mit seinem tatsächlichen Müllanteil an den Kosten für die Müllabfuhr beteiligt werden kann. Dem Kunden würde damit die Problematik der Abfallbeseitigung bewußter werden und seine Akzeptanz für zukünftige Preiserhöhungen steigen. Der Kunde könnte durch vernünftiges Verhalten selber Einfluß nehmen auf die ihm entstehenden Kosten.

### STAND DER TECHNIK

Diese Problemstellung ist bekannt. So ist in der DE-A-33 32 058 offenbart, eine Hub-Kippvorrichtung zur automatischen Entleerung von Müllbehältern so auszurüsten, daß sie selbsttätig Müllbehälter wägen kann. Ferner ist in der DE-OS 34 47 648 eine technische Möglichkeit zur Realisation dieser Aufgabenstellung angegeben. Die danach bekannte Wägeeinrichtung ist in die Hub-Kippvorrichtung integriert. In einer bestimmten Hubposition des zu wägenden Müllbehälters wird die Hub-Kippvorrichtung angehalten, die Wägeeinrichtung, die während der Hub-Kippbewegung arretiert ist, entriegelt und der Wägevorgang durchgeführt. Nach Abschluß des Wägevorganges wird die Hub-Kippvorrichtung wieder in Bewegung gesetzt und der Hub-Kippvorgang und damit das Entleeren fortgesetzt. Auf diese Weise wird das Behältergewicht bei der Aufwärtsbewegung und bei der Abwärtsbewegung des Behälters ermittelt, so daß das Bruttogewicht des gefüllten Behälters und das Leergewicht des Behälters ermittelt und daraus die entleerte Müllmenge berechnet werden kann. Jeder Behälter wird ferner identifiziert, so daß die Identifikations- und Wägedaten für jeden Entleervorgang einer Registrier- und Steuereinrichtung zugeführt und so jedem Kunden das Gewicht "seines" Müllanfalles in Rechnung gestellt werden kann. Dadurch, daß während des eigentlichen Wägevorganges der entsprechende Behälter in seiner Hub-Kippbewegung angehalten werden muß, dauert der Entleervorgang insgesamt entsprechend lange.

Aus der EP-A 0 255 624 ist eine Vorrichtung zum Entleeren von Behältern bekannt, bei der das Gewicht eines zu entleerenden Behälters während der Hub-Kippbewegung ermittelt werden soll. Die während des gesamten, ununterbrochenen Ablaufs des Entleervorganges von Kraftaufnehmern ständig ermittelten Meßwerte werden in einem oder mehreren Taktfenstern (Hub-Schwenkbereichen) zur Auswertung ausgewählt. Bei dieser Art von Wägen liegt das Problem darin, aus der Vielzahl von ermittelten Meßwerten den "richtigen" Meßwert herauszufinden. Konkrete Angaben darüber, wie dieser richtige Meßwert ausgewählt und damit ermittelt werden könnte, sind nicht angegeben.

Des weiteren ist eine Hub-Kippvorrichtung mit Wägeeinrichtung für Abfallbehälter an einem Müllsammelfahrzeug beispielsweise aus DE-A-3 819 169 bekannt. Diese bekannte Wägeeinrichtung besitzt eine Einrichtung zum Korrigieren der durch Schiefstellung des Müllsammelfahrzeuges bzw. der Hub-Kippvorrichtung verfälschten Wägeergebnisse. Diese Korrektureinrichtung weist auf ein Korrekturglied, das immer zur Lotrechten ausgerichtet ist. Das Korrekturglied wird durch einen Neigungsmesser verwirklicht, der Schrägstellungen in Fahrzeuglängs- und/oder -querrichtung korrigieren kann. Die Wägeeinrichtung besitzt ferner eine Gewichtsmeßeinrichtung an der Hub-Kippvorrichtung, die in Gestalt einer Wägezelle verwirklicht wird. Mit der Wägezelle kann das Gewicht einer an der Hub-Kippvorrichtung anhängenden Mülltonne in einer bestimmten, freihängenden Stellung ermittelt werden, gegebenenfalls mit einer durch den Neigungsmesser ermittelten Korrektur. Die Wägeposition wird durch einen Positionsdetektor ermittelt. In dieser Wägeposition, d. h. in der entsprechenden Hubstellung, kann nicht nur die Mülltonne gewogen sondern auch eine an der Mülltonne vorhandene, kundenspezifische Erkennungsvorrichtung beispielsweise in Form eines Strichcode-Aufklebers mittels einer am Müllfahrzeug angeordneten Lesevorrichtung abgelesen werden. Auf diese Weise soll es möglich sein, die Zuordnung von Mülltonnen zum Benutzer "praktisch simultan"während der Hub-Kippbewegung des Müllbehälters durchzuführen.
Durch den Ausdruck "praktisch" wird verdeutlicht, daß das Wiegen in Ruhestellung der Hub-Kippbewegung, und nicht während der Hubbewegung erfolgt.

Dadurch, daß während des eigentlichen Wägevorganges der zu entleerende Behälter in seiner Hub-Kippbewegung angehalten werden muß, wird der eigentliche Entleervorgang zwangsläufig verlängert. Dies hat nachteilige Auswirkungen hinsichtlich der Wirtschaftlichkeit, mit der das Müllsammelfahrzeug eingesetzt werden kann.

Darüber hinaus ist durch EP-A-0 402 352 eine dynamische Wägung für die zu entleerenden Müllbehälter vorgeschlagen worden. Dabei wird der Entleervorgang ohne Unterbrechung der Hubbewegung durchgeführt und gleichzeitig mit der laufenden Ermittlung von Behältergewichten Messungen der Beschleunigungskräfte einer Referenzmasse durchgeführt.

### DARSTELLUNG DER ERFINDUNG

Ausgehend von diesem vorbekannten Stand der Technik liegt der Erfindung die Aufgabe zugrunde, einen konkreten Weg aufzuzeigen, wie bei einer Wägeeinrichtung der eingangs genannten Art exakte Wägeergebnisse erzielt werden können.

Diese Erfindung ist für die eingangs genannte Wägeeinrichtung durch die Merkmale des Patentanspruchs 1 gegeben. Die Wägeeinrichtung für Abfallbehälter zeichnet sich dementsprechend durch eine Einrichtung aus, mit der die durch Schiefstellung des Müllsammelfahrzeuges bzw. dessen Hub-Kippvorrichtung verfälschten Wägeergebnisse korrigiert werden können. Die durch die bekannten Wägeeinrichtungen ermittelten Wägeergebnisse sind alle nämlich zumindest deswegen ungenau, weil bei ihnen nicht eine in aller Regel vorhandene Schiefstellung des Müllsammelfahrzeuges in bezug zur Lotrechten berücksichtigt wird. Das Gewicht eines angehobenen Behälters ist in einer bestimmten Hubstellung oder in einem bestimmten Hubbereich unterschiedlich groß je nachdem, wie schief die Hub-Kippvorrichtung im Raum ausgerichtet ist. Da die Hub-Kippvorrichtung in aller Regel fest am Müllsammelfahrzeug befestigt ist, ergeben sich bei einem bergaufwärts oder talabwärts ausgerichteten Müllsammelfahrzeug unterschiedliche Meßwerte. Darüber hinaus wird auch eine vorhandene Querneigung des Müllsammelfahrzeuges, beispielsweise verursacht durch eine entsprechende Straßenquerneigung, sich ebenfalls verfälschend auf das Wägeergebnis auswirken.

Die Erfindung basiert damit auf der Erkenntnis, daß sich mit den aus dem Stand der Technik bekannten Wägeeinrichtungen keine exakten Wägeergebnisse erzielen lassen, sondern daß es unbedingt erforderlich ist, eine Schiefstellung der Hub-Kippvorrichtung zu berücksichtigen.

Nach einer ersten Ausführungsform der Erfindung besitzt diese Korrektureinrichtung ein um die Lotrechte pendelndes Korrekturglied, dessen Schiefstellung in bezug zu der Lotrechten ein Maß für die Größe der vorzunehmenden Korrektur ist. Dieses Korrekturglied kann beispielsweise ein kardanisch aufgehängtes Pendel sein, so daß die jeweilige Winkelverstellung des Pendels eine entsprechende Verstellung der Längs- und Querachse des Kardangelenks zur Folge hat. Diese Winkelausschläge können auf bekannte Weise ermittelt und den beim Entleeren des Müllbehälters ermittelten Meßwerten korrigierend überlagert werden. Statt der Lotrechten könnte auch eine in bezug zu der Lotrechten winkelfest angeordnete sonstige Achse, beispielsweise die Waagerechte, als Bezugsgerade verwendet werden. Statt eines lotrechten Pendels könnte dann ein Waagebalken und dessen Winkelausschläge bezüglich der Waagerechten verwendet werden.

Bei einer am Heck eines Fahrzeuges angebrachten Hub-Kippvorrichtung kann nach einem weiteren Merkmal der Erfindung eine Schiefstellung dieser Hub-Kippvorrichtung in Längsrichtung des Müllfahrzeuges, d. h. eine Schiefstellung des Fahrzeuges um dessen Querachse, dadurch ermittelt werden, daß diese Korrektureinrichtung ein Korrekturglied besitzt, das so am Müllfahrzeug gelagert ist, daß es mit einem Gliedteil sowohl immer in fester Winkelanordnung zur Lotrechten als auch immer in senkrechter Winkelanordnung zur Hub- bzw. Schwenkachse der Hub-Kippvorrichtung ausgerichtet ist. An diesem Gliedteil bewegen sich dann beim Entleeren eines Behälters hub- bzw. schwenkbare Konstruktionsteile dieser Hub-Kippvorrichtung vorbei. Mit einer Überwachungseinrichtung wird die maximale Annäherung dieser Konstruktionsteile an dem Gliedteil festgestellt und das Gewicht des Behälters nur bei dieser maximalen Annäherung ermittelt. Die Gewichtsermittlung kann dabei über Kraftmesser erfolgen, die in die Hub-Kippvorrichtung integriert sind und durch die die Belastung festgestellt wird, die durch einen an der Hub-Kippvorrichtung angehängten Abfallbehälter mit verursacht wird.

Die maximale Annäherung der Hub-Kippvorrichtung an diesem Korrekturglied wird dabei vorzugsweise dadurch ermittelt, daß sowohl an dem Korrekturglied, d. h. an seinem Gliedteil, ein Kontaktelement als auch an den an diesem Gliedteil vorbeibewegbaren Konstruktionsteilen der Hub-Kippvorrichtung ein Kontaktelement vorhanden ist, die beide miteinander bei extremer Nachbarschaft ein Schaltelement zum Erzeugen eines elektrischen Signals bilden. Dieses Steuersignal kann dann zum Festlegen des Zeitpunktes zum Ermitteln des Behältergewichtes verwendet werden. Beim Ermitteln des Gewichts des zu entleerenden Müllbehälters wird damit eine mögliche Schiefstellung um die Fahrzeugquerachse bei einer am Heck des Fahrzeuges vorhandenen Hub-Kippvorrichtung berücksichtigt. Der Behälter ist in bezug auf eine mögliche Schiefstellung immer in der gleichen beispielsweise horizontal ausgerichteten Position beim Ermitteln seines Gewichtes. Sofern das Müllsammelfahrzeug ein sogenannter Seitenbelader ist, was bedeutet, daß die Hub-Kippvorrichtung seitlich am Müllfahrzeug vorhanden ist, läßt sich mit dieser Korrektureinrichtung eine Schiefstellung des Müllsammelfahrzeuges um seine Längsachse ausgleichen. Eine Korrektur kann nämlich mit dieser Korrektureinrichtung nicht bezüglich einer Schiefstellung der Hub-Schwenkachse gegen die Horizontale sondern nur senkrecht dazu ausgeglichen werden. Sofern auch eine Schiefstellung der Hub-Schwenkachse gegen die Horizontale berücksichtigt werden soll, ist ein weiteres Korrekturglied beispielsweise in Gestalt des vorstehend genannten Pendels erforderlich.

Nach einem weiteren Merkmal der Erfindung sind zwei Kraftmesser vorhanden, die in Richtung parallel zur Hub- bzw. Schwenkachse der Hub-Kippvorrichtung einen vorbestimmten Abstand voneinander aufweisen. Da nicht in jedem Fall sichergestellt ist, daß ein Behälter immer in gleicher Weise bezüglich eines Kraftmessers seitlich ausgerichtet auf der Hub-Kippvorrichtung vorhanden ist, sondern daß der Behälter in seitlicher Richtung unterschiedlich an der Aufnahmeleiste der Hub-Kippvorrichtung positioniert sein kann, kann durch einen einzigen Kraftmesser das tatsächliche Gewicht dieses Behälters nicht ermittelt werden. Durch zwei parallel zur Aufnahmeleiste der Hub-Kippvorrichtung voneinander beabstandete Kraftmesser ist dies aber problemlos möglich.

Weitere Ausgestaltungen und Vorteile der Erfindung sind den in den Ansprüchen weiterhin aufgeführten Merkmalen sowie den nachfolgenden Ausführungsbeispielen zu entnehmen.

### KURZE BESCHREIBUNG DER ZEICHNUNG

Die Erfindung wird im folgenden anhand des in der Zeichnung dargestellten Ausführungsbeispiels näher beschrieben und erläutert. Es zeigen:
- Fig. 1: ein bezüglich der Lotrechten Z bezüglich seiner Längsausrichtung X und Querausrichtung Y schief ausgerichtetes Müllsammelfahrzeug vor einem ebenfalls im Raum schief angeordneten Abfallbehälter,
- Fig. 2: eine perspektivische Teilansicht der am Müllsammelfahrzeug nach Fig. 1 vorhandenen Hub-Kippvorrichtung,
- Fig. 3: eine schematische Seitenansicht der Hub-Kippvorrichtung nach Fig. 2,
- Fig. 4: eine die Schiefstellung korrigierende Einrichtung in schematischer Darstellung,
- Fig. 5 und 6: eine Darstellung ähnlich Fig. 3 mit jeweils unterschiedlicher Neigung der Rückfront des in Fig. 1 dargestellten Müllsammelfahrzeuges,
- Fig. 7: eine schematische Darstellung einer weiteren Wägeeinrichtung mit Korrigiereinrichtung nach der Erfindung.

### WEGE ZUR AUSFÜHRUNG DER ERFINDUNG

An einem Müllsammelfahrzeug 10 ist an dessen Rückfront 12 eine Einfüllöffnung 14 vorhanden, in die hinein der Inhalt eines Abfallbehälters 16 entleert werden kann.

Zum Entleeren dieses Behälters dient eine Hub-Kippvorrichtung 18, die unterhalb der Einfüllöffnung 14 an der Rückfront 12 angebracht ist. Mit dieser Hub-Kippvorrichtung 18 wird ein Behälter 16 aufgenommen und in einer Hub-Kippbewegung mit seiner Öffnung an der Einfüllöffnung 14 so positioniert, daß sein Inhalt durch die Einfüllöffnung 14 in das Müllsammelfahrzeug 10 hineinfallen kann.

Das Müllsammelfahrzeug 10 steht mit seinen Rädern auf einer Bodenoberfläche wie z. B. einer Straßenoberfläche, die in Querrichtung Y eine Querneigung b und in Längsrichtung X eine Längsneigung a in einem rechtwinkligen Koordinatensystem X, Y, Z aufweist. Das Müllsammelfahrzeug 10 ist insoweit schief im Raum (Lotrechte Z) ausgerichtet. Entsprechend schief ist auch die an der Rückfront 12 befestigte Hub-Kippvorrichtung 18 ausgerichtet.

Der vor der Hub-Kippvorrichtung vorhandene Abfallbehälter 16 weist eine Schiefstellung mit den Neigungswinkeln bB, aB auf. Diese Schiefstellung ist im allgemeinen unterschiedlich zu der Schiefstellung des Müllsammelfahrzeuges 10.

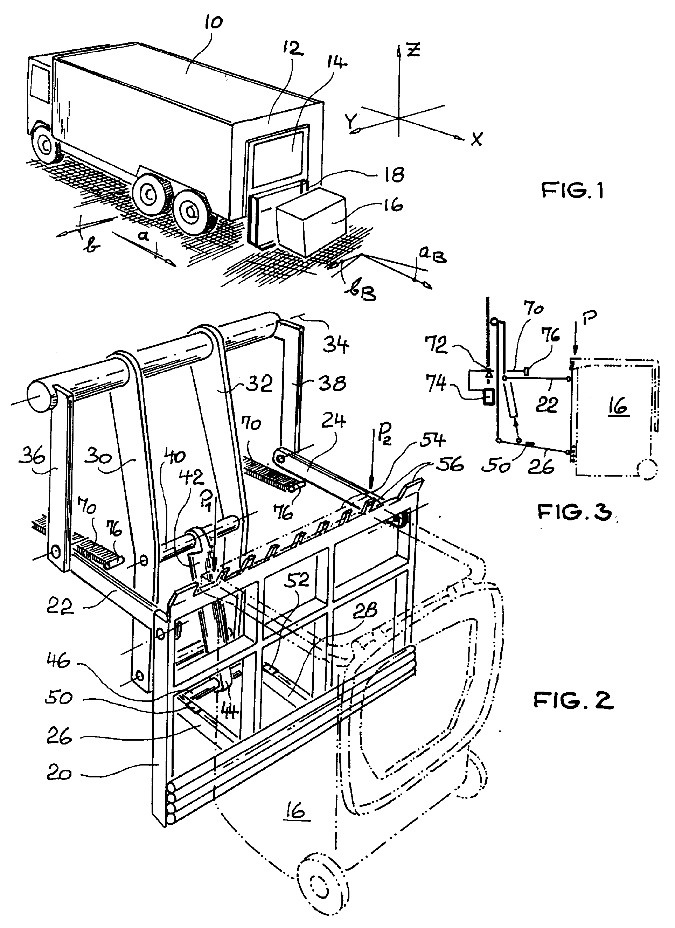

Die Hub-Kippvorrichtung 18 besitzt ein Hubgestell 20, das an einem linken und rechten oberen Hubarm 22, 24 sowie an einem linken und rechten unteren Hubarm 26, 28 aufgehängt ist. Die unteren Hubarme 26, 28 sind dabei an einem linken und rechten Schwenkarm 30, 32 gelenkig befestigt, während die oberen Hubarme 22, 24 an einem fest an der Rückfront 12 des Müllsammelfahrzeuges 10 befestigten linken und rechten Rahmenteil 36, 38 gelenkig befestigt sind. Die Schwenkarme 30, 32 sind um eine Schwenkachse 34, die am Rahmenteil 36, 38 fest gelagert ist schwenkbar angeordnet. An den Schwenkarmen 30, 32 ist an einem dieselben quer aussteifenden Querglied 40 ein Hubzylinder 42 angelenkt. Das freie Ende seiner Kolbenstange 44 ist an einem Querglied 46 gelenkig befestigt, das die unteren Hubarme 26, 28 gegenseitig aussteift. Mittels des Hubzylinders 42 lassen sich die unteren Hubarme 26, 28 relativ zum Querglied 40 und damit relativ zu den Schwenkarmen 30, 32 anheben bzw. absenken. Über nicht dargestellte weitere Hubzylinder lassen sich auch die Schwenkarme 30, 32 um die Schwenkachse 34 verschwenken und dadurch ein auf dem Hubgestell 20 positionierter Behälter 16 zur Einfüllöffnung 14 (Fig. 1) hinbewegen.

In den unteren Hubarmen 26, 28 ist jeweils ein linker und ein rechter Kraftmesser 50, 52 eingebaut. Über diese Kraftmesser 50, 52 wird die Verformung gemessen, die an dieser Stelle an den unteren Hubarmen 26, 28 vorhanden ist. Diese Verformung ist unterschiedlich groß je nachdem, welches Gewicht P1, P2 durch einen Behälter 16 auf das Hubgestell 20 und damit auf die unteren Hubarme 26, 28 ausgeübt wird. Die von den Kraftmessern 50, 52 ermittelten Werte sind jeweils unterschiedlich, je nachdem, ob der Behälter 16 in Y-Richtung weiter links oder rechts mit seinem Umschlagrand 54 auf der Aufnahmeleiste 56 des Hubgestells 20 positioniert ist. Sofern die Ausrichtung in Y-Richtung vorgegeben ist, sei es etwa deswegen, weil der Müllbehälter nur in einer bestimmten Querausrichtung Y auf der Aufnahmeleiste 56 abgesetzt werden kann oder weil bei einem bestimmten Behältertyp jeweils feststeht, in welcher Querausrichtung Y er auf der Aufnahmeleiste jeweils aufruht, könnte auch mit einem einzigen Kraftmesser 50 oder 52 ausgekommen werden.

Diese feste Ausrichtung in Querrichtung Y könnte etwa bei einem Behälter vorgegeben sein, der beispielsweise mit einer Trennwand zur getrennten Aufnahme von Müllbestandteilen ausgestattet ist und bei der diese Trennwand immer in gleicher Positionierung auf der Aufnahmeleiste 56 vorhanden sein muß, damit diese Trennwand mit einer in der Einfüllöffnung 14 vorhandenen anderen Trennwand korrespondieren kann. Es muß nämlich sichergestellt werden, daß die einzelnen Kammern des Behälters 16 auch in die entsprechend unterteilte Einfüllöffnung in der Rückfront des Müllsammelfahrzeuges hineinentleert werden und keine Vermischung stattfinden kann.

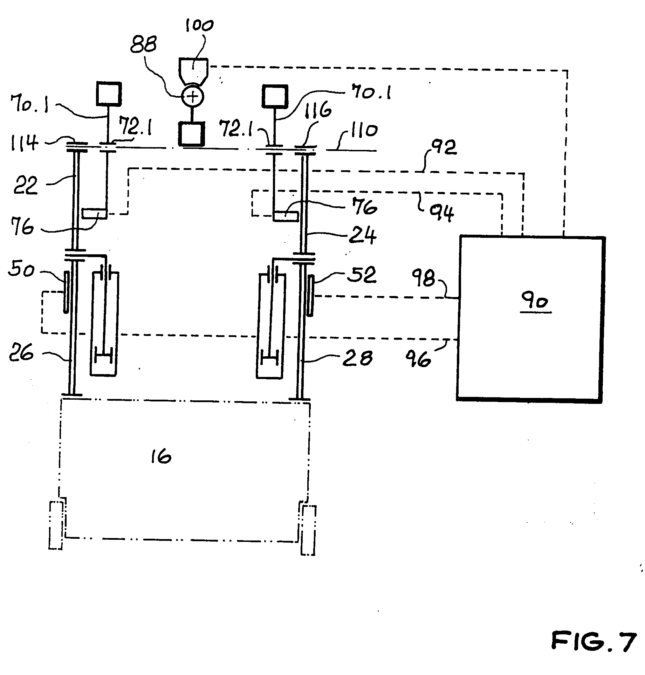

An der Rückfront 12 des Müllsammelfahrzeuges 10 ist ein Waagebalken 70 um ein Gelenk 72 pendelnd gelagert, der mit einem Gegengewicht 74 so versehen ist, daß der Waagebalken 70 immer in eine feste Richtung, im Beispielsfall in eine waagerechte Richtung, weist. Am Ende des Waagebalkens 70 ist ein Näherungsschalter in Form eines Sensors 76 vorhanden. Ein solcher Waagebalken ist sowohl neben dem linken als auch neben dem rechten oberen Hubarm 22, 24 vorhanden (Fig. 7). Jeder der Sensoren 76 wirkt mit dem in aller Regel metallischen Hubarm 22, 24 als ein jeweiliges Schaltelement zusammen.

Sobald der Hubarm 22 bzw. 24 in extremer Nachbarschaft zum Sensor 76 vorhanden ist, was bei einer bestimmten Schwenkstellung der oberen Hubarme 22, 24 der Fall ist, wird durch den Sensor 76 ein elektrisches Signal ausgelöst, das von einem Wägerechner 90 (Fig. 7) registriert wird. Nur zu diesem Zeitpunkt, wo der Wägerechner 90 von den Sensoren 76 entsprechende Signale 92, 94 erhält, wertet er die von den Kraftmessern 50, 52 ebenfalls erhaltenen Meßsignale 96, 98 aus.

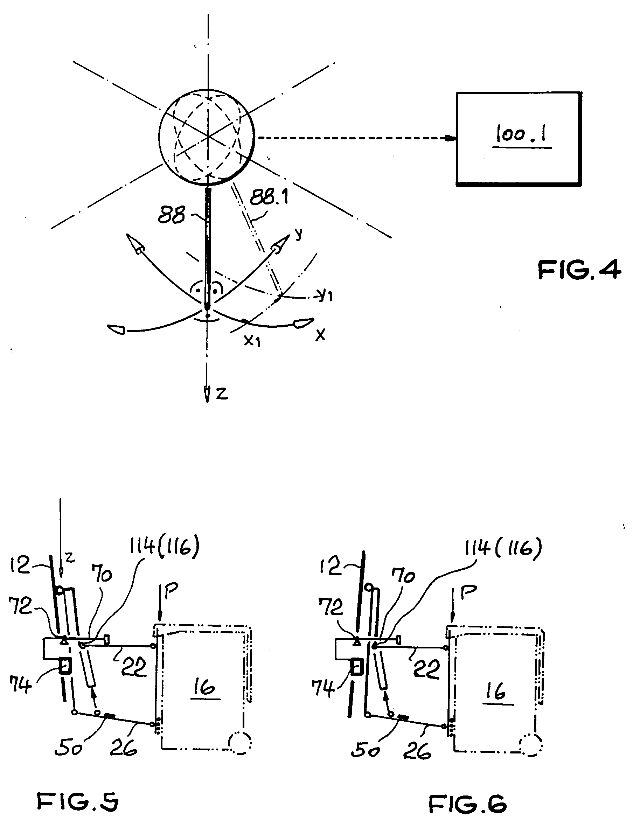

Bei dieser Auswertung wird noch ein von einer Kontrolleinrichtung 100 übermitteltes Meßsignal 102 berücksichtigt. Dieses Meßsignal 102 berücksichtigt eine Schiefstellung der Hub-Kippvorrichtung im Raum, wie sie beispielsweise durch eine Kontrolleinrichtung 100.1 (Fig. 4) mit 2-achsigen Schiefstellungen X1, Y1 dem Wägerechner 90 übermittelt werden könnte. Die in Fig. 4 durch ein kardanisch aufgehängtes Pendel 88 vorhandenen Schiefstellungen X1, Y1 (Pendel 88.1) können auf bekannte Weise erfaßt und übermittelt werden.

Bei der Darstellung gemäß Fig. 7 muß demgegenüber nur eine Schiefstellung der Hub-Kippvorrichtung um die X-Achse ausgeglichen werden, so daß nur ein entsprechender Meßwert Y1 vorhanden ist. Infolge eines Waagebalkens 70.1 ist eine Schiefstellung des Müllsammelfahrzeuges 10 um die Y-Achse und damit ein Ausschlag beispielsweise eines Pendels 88 in X-Richtung (Fig. 4) nämlich nicht zu berücksichtigen. Bei der in Fig. 7 dargestellten Anordnung sind die Waagebalken 70.1 um eine Achse 110 gelenkig gelagert, die durch die Lagerstellen 114, 116 der oberen Hubarme 22, 24 geht. Bei dieser Konstruktion liegen im Unterschied zu der Darstellung gemäß Fig. 3, 5 und 6 die Gelenke 72.1 der Waagebalken 70.1 und die oberen Lagerstellen 114, 116 der oberen Hubarme 22, 24 auf einer Geraden, die durch die Achse 110 definiert ist. Eine Schiefstellung der Rückfront 12 des Müllsammelfahrzeuges 10 hat damit im Unterschied zu der Anordnung der Waagebalken 70 mit gegenüber der Lager 114, 116 versetzter Gelenke 72 (Fig. 3, 5 und 6) keine Auswirkungen bezüglich derjenigen Hubhöhen der Schwenkposition der oberen Hubarme 22, 24, in der diese sich in extremer Nachbarschaft zu den Sensoren 76 befinden. Bei der Anordnung gemäß Fig. 7 wird daher ein Behälter 16 immer in gleicher horizontalen Ausrichtung sowie Hubstellung gewichtsmäßig erfaßt.

Das bedeutet, daß der vom Behälter zurückgelegte Hubweg bei der Darstellung gemäß Fig. 7 immer derselbe ist. Dies hat Vorteile insoweit, als sich für einen bestimmten Behältertyp sich dessen Schwingungsverhalten nach einem bestimmten Hubweg genau ermitteln läßt, so daß die durch die Kraftmesser 50, 52 ermittelten Meßwerte bestimmten Behältergewichten exakt zugeordnet werden können. Jeder Behältertyp wird sich nämlich abhängig von seinem Gewicht nach einem bestimmten Hubweg vergleichbar verhalten. Für die Erfindung ist daher die Erkenntnis ganz wichtig, daß nicht in einem Hubbereich Gewichte ermittelt werden müssen, sondern daß es unter den vorstehend geschilderten Bedingungen möglich ist, gewissermaßen "punktuell" das Gewicht zu ermitteln, d. h., zu einem einzigen Zeitpunkt eine einzige Messung durchzuführen. Allerdings ist es für eine exakte Gewichtsermittlung unbedingt erforderlich, die Schiefstellung der Wägeeinrichtung und damit die Schiefstellung des Müllsammelfahrzeuges zu berücksichtigen und darüber hinaus sicherzustellen, daß das Schwingungsverhalten eines bestimmten Behältertyps immer in vergleichbarer Weise auftritt, was bedeutet, daß der Behälter immer in einer bestimmten Stellung im Raum gewichtsmäßig erfaßt werden muß.

In diesem Zusammenhang ist es daher sinnvoll, bei dem Ermitteln des Gewichtes auch den Behältertyp festzustellen und in die Rechnung einfließen zu lassen, da sich unterschiedliche Behältertypen (Größe, Gewicht) unterschiedlich auf das Wägeergebnis auswirken, wie durch Versuche festgestellt werden konnte.

## Patentansprüche

1. Hub-Kippvorrichtung mit Wägeeinrichtung für Abfallbehälter die ortsfest an einem Müllsammelfahrzeug bzw. an der Hub-Kippvorrichtung angebracht ist, mit
- einer Einrichtung zum Korrigieren (70, 100) der durch Schiefstellung des Müllsammelfahrzeuges (10) bzw. dessen Hub-Kippvorrichtung (18) verfälschten Wägeergebnisse, die ein Korrekturglied (70, 74) besitzt, das in Betrieb immer zur Lotrechten ausgerichtet ist,
- einer Gewichtsmeßeinrichtung (50, 52) an der Hub-Kippvorrichtung (18, 26, 28), durch die die Belastung feststellbar ist, die durch einen an der Hub-Kippvorrichtung (18) angehängten Abfallbehälter (16) mit verursacht wird,
**dadurch gekennzeichnet,** daß
- dieses Korrekturglied (70, 74) mit einem Gliedteil (70) vorzugsweise am Müllsammelfahrzeug (10, 18) derart gelagert ist, daß es zumindest mit dem Gliedteil (70) sowohl in Betrieb immer in fester Winkelanordnung zur Lotrechten als auch immer in senkrechter Winkelanordnung zur Hub- bzw. Schwenkachse der Hub-Kippvorrichtung ausgerichtet ist,
- hub- bzw. schwenkbare Konstruktionsteile (22, 24) der Hub-Kippvorrichtung (18) bei ihrer Hub-Kippbewegung an diesem Gliedteil (70) vorbeibewegbar sind,
- eine die maximale Annäherung dieser Konstruktionsteile (22, 24) an dem Gliedteil (70) feststellende Überwa- chungseinrichtung (100) vorhanden ist,
- an dem Gliedteil (70) des Korrekturgliedes ein Kontaktelement (76) und an dem Konstruktionsteil (22, 24) der Hub-Kippvorrichtung ein Kontaktglied vorhanden ist, die beide miteinander bei extremer Nachbarschaft ein Schaltelement zum Erzeugen eines elektrischen Steuersignals (92, 94) bilden,
- dieses Steuersignal (92, 94) zum Festlegen des Zeitpunktes zum Ermitteln des Behältergewichtes verwendbar ist, so daß das Gewicht des Behälters nur bei festgestellter extremer gegenseitiger Annäherung dieser Teile ermittelbar ist.

2. Hub-Kippvorrichtung mit Wägeeinrichtung nach Anspruch 1,
**dadurch** **gekennzeichnet**, daß
Kraftmesser (50, 52) an der Hub-Kippvorrichtung (18, 26, 28) vorhanden sind, durch die die Verformung der Hub-Kippvorrichtung feststellbar ist.

3. Hub-Kippvorrichtung mit Wägeeinrichtung nach Anspruch 1 oder 2,
**dadurch gekennzeichnet**, daß
das Korrekturglied ein kardanisch aufgehängtes Pendel (88) ist, dessen Schiefstellung in bezug. zu der Lotrechten bzw. zu dieser Achse ein Maß für die Größe der vorzunehmenden Korrektur ist.

4. Hub-Kippvorrichtung mit Wägeeinrichtung nach Anspruch 1,
**dadurch gekennzeichnet**, daß
das Schaltelement magnetisch, induktiv oder fotoelektrisch auslösbar ist.

5. Hub-Kippvorrichtung mit Wägeeinrichtung nach Anspruch 1,
**dadurch gekennzeichnet**, daß
die Wägeeinrichtung zumindest zwei Kraftmesser (50, 52) aufweist, die in Richtung (Y) parallel zur Hub- bzw. Schwenkachse (34) der Hub-Kippvorrichtung voneinander beabstandet sind.

## Claims

1. Raising and tipping apparatus with a weighing device for refuse containers, which is fitted in a stationary manner on a refuse-collecting vehicle or on the raising and tipping apparatus, having
- a device for correcting (17, 100) the weighing results, falsified by the skewed position of the refuse-collecting vehicle (10) or its raising and tipping apparatus (18), and has a correcting member (70, 74) which, in operation, is always aligned with the vertical,
- a weight-measuring device (50, 52) which is located on the raising and tipping apparatus (18, 26, 28) and by means of which the loading, caused by a refuse container (16) suspended on the raising and tipping apparatus (18), can be established,
characterized in that
- said correcting member (70, 74) with a member part (70) is preferably mounted on the refuse-collecting vehicle (10, 18) such that, at least by the member part (70), it is always aligned in a fixed angle arrangement with respect to the vertical, when it is in operation, and in a perpendicular angle arrangement with respect to the raising and pivoting axis of the raising and tipping apparatus,
- raisable and pivotable construction parts (22, 24) of the raising and tipping apparatus (18) can move past said member part (70) during their raising and tipping movement,
- a monitoring device (100), which establishes the maximum degree of closeness of said construction parts (22, 24) to the member part (70) is present,
- a contact element (76) is present on the member part (70) of the correcting member, and a contact member is present on the construction part (22, 24) of the raising and tipping apparatus, said contact element and contact member together forming, when in extremely close proximity, a switching element for generating an electric control signal (92, 94),
- said control signal (92, 94) can be used to fix the time point for determining the weight of the container, with the result that the weight of the container can be determined only in the case of established, extreme mutual proximity of said parts.

2. Raising and tipping apparatus with a weighing device according to Claim 1, characterized in that there are provided, on the raising and tipping apparatus (18, 26, 28), dynamometers (50, 52) by means of which the deformation of the said raising and tipping apparatus can be established.

3. Raising and tipping apparatus with a weighing device according to Claim 1 or 2, characterized in that the correcting member is a cardanically suspended pendulum (88), whose skewed position with respect to the vertical or to this axis is a measure of the magnitude of the correction which is to be carried out.

4. Raising and tipping apparatus with a weighing device according to Claim 1, characterized in that the switching element can be triggered magnetically, inductively or photoelectrically.

5. Raising and tipping apparatus with a weighing device according to Claim 1, characterized in that the weighing device exhibits at least two dynamometers (50, 52), which are pressed apart from one another in the direction (Y) parallel to the raising and pivoting axis (34) of the raising and tipping apparatus.

## Revendications

1. Appareil de levage-basculement possédant un dispositif de pesage pour poubelles disposé stationnaire sur une benne à ordures ou sur l'appareil de levage-basculement, comprenant
- un dispositif (70, 100) pour corriger les résultats de pesage faussés par la position inclinée de la benne à ordures (10) ou de son appareil de levage-basculement (18), dispositif qui possède un organe correcteur (70, 74) qui est orienté toujours, pendant le fonctionnement, par rapport à la verticale, et
- un dispositif (50, 52) de mesure de poids, prévu sur l'appareil de levage-basculement (18, 26, 28) et par lequel peut être déterminée la charge produite en partie par une poubelle (16) suspendue à l'appareil de levage-basculement (18),
caractérisé en ce que
- cet organe correcteur (70, 74) est monté, par une partie d'organe (70), de préférence sur la benne à ordures (10, 18), de manière que, au moins par la partie d'organe (70), il soit toujours orienté, pendant le fonctionnement, à la fois dans une disposition angulaire fixe par rapport à la verticale et toujours dans une disposition angulaire perpendiculaire à l'axe de levage et de basculement de l'appareil de levage-basculement,
- des parties relevables et basculantes (22, 24) de la construction de l'appareil de levage-basculement (18) sont déplaçables, lors de leur mouvement de levage-basculement, devant cette partie d'organe (70),
- un dispositif de surveillance (100) est prévu pour constater le rapprochement maximal de ces parties de construction (22, 24) par rapport à la partie d'organe (70),
- un élément de contact (76) est prévu sur la partie d'organe (70) de l'organe correcteur et un organe de contact est prévu sur la partie de construction (22, 24) de l'appareil de levage-basculement, élément et organe de contact qui forment tous deux, ensemble, lorsqu'ils sont approchés de manière extrême l'un de l'autre, un élément de commutation pour générer un signal électrique de commande (92, 94),
- ce signal de commande (92, 94) est utilisable pour fixer l'instant de détermination du poids de la poubelle, de sorte que le poids de la poubelle peut être déterminé seulement lorsqu'il a été constaté que lesdites parties sont mutuellement approchées de manière extrême.

2. Appareil de levage-basculement possédant un dispositif de pesage selon la revendication 1, caractérisé en ce que des dynamomètres (50, 52) sont prévus sur l'appareil de levage-basculement (18, 26, 28), par lesquels peut être constatée la déformation de l'appareil de levage-basculement.

3. Appareil de levage-basculement possédant un dispositif de pesage selon la revendication 1 ou 2, caractérisé en ce que l'organe correcteur est un pendule (88) suspendu à la Cardan et dont la position inclinée par rapport à la verticale ou par rapport à cet axe est une mesure pour la grandeur de la correction à effectuer.

4. Appareil de levage-basculement possédant un dispositif de pesage selon la revendication 1, caractérisé en ce que l'élément de commutation peut être déclenché par voie magnétique, inductive ou photoélectrique.

5. Appareil de levage-basculement possédant un dispositif de pesage selon la revendication 1, caractérisé en ce que le dispositif de pesage comporte au moins deux dynamomètres (50, 52) qui sont mutuellement espacés dans la direction (Y) parallèle à l'axe de levage et de basculement (34) de l'appareil de levage-basculement.
